# EUROPEAN PATENT SPECIFICATION

(11) **EP 2 477 760 B1**
(45) Date of publication and mention of the grant of the patent: **22.07.2015**
(21) Application number: 10765816.3
(22) Date of filing: 25.08.2010
(51) Int. Cl.: B07C 5/34

(54) **METHOD FOR SORTING WASTES**
VERFAHREN ZUR MÜLLSORTIERUNG
PROCEDE POUR LE TRI DES DECHETS

(30) Priority: 14.09.2009 FI 20095945
(43) Date of publication of application: 25.07.2012
(73) Proprietor: Maricap OY, 01450 Vantaa (FI)
(72) Inventor: SUNDHOLM, Göran, 04310 Tuusula (FI)
(74) Representative: Heinänen Oy Patent Agency
(86) International application number: PCT/FI2010/050670
(87) International publication number: WO 2011/029991

(56) References cited:
- EP-A1- 1 854 556
- WO-A1-2006/096101
- US-A- 5 100 005

## Description

### Background of the invention

The object of the invention is a method as defined in the preamble of claim 1.

The invention relates generally to waste handling and more particularly to the sorting of wastes.

Nowadays it is typical, e.g. in respect of household waste, that households use different bags, sacks or carrier bags as waste bags, in which waste is placed. For example, in Finland it is normal to use plastic carrier bags from shops, in which shopping has been carried home, as waste bags. Wastes are carried in plastic carrier bags to a waste bin, into which typically the bag with its contents, closed with a knot is placed. The wastes are transported onwards for further processing by a garbage truck. In the current systems one disadvantage, among others, is that the sorting of wastes is awkward. It is often possible that users do not bother to sort wastes into different allotments, but instead mix all wastes in the same waste bag or waste bin. In this case mixed waste is produced, the reclamation of which is difficult.

Known in the art are solutions for sorting waste, in which solutions different types of wastes are arranged to be transported in different containers, such as in waste bags or bins of different colors. For example, households place different types of wastes in waste bags of different colors. A waste bag of a specific color is specified for each type of waste. Wastes are transported e.g. in a normal garbage truck to a waste center, where the wastes are sorted into different allotments on the basis of the colors of the waste bags. The sorting of waste optically is described in publication EP0759816. A drawback in this method is that there must be waste bags separately arranged for the purpose for each waste type to be sorted. Another drawback is also the uncertainty of operation of the automatic optical sorting apparatus used in sorting the waste bags in a dirty environment. The sorting of waste is described in publication WO03039773 A1. WO 2006/096101 shows a disposable waste container, designed to receive a quantity of waste, which waste container is provided with means readable based on radio frequencies. There are also shown a set of parts, an arrangement, a method and a system for sorting of such waste containers.

On the one hand, nothing guarantees that a waste producer, such as a household, will use a waste bag of the correct color for each type of waste. It is difficult to get misusers of the system to change their habits. On the other hand, identifying or tracing a misuser after the event is almost impossible.

Furthermore, it is typical when using plastic carrier bags or plastic bags as waste bags that the knot made in the bag, e.g. from the carrying handles, opens, in which case the wastes can spread freely during transportation to outside the bag. This makes the transport vehicle, the waste bin and/or other waste bags dirty on the outside, hampering the sorting process and also forming a hygiene problem. The waste bags with the waste they contain, end up nowadays, at a landfill site, which is a considerable problem.

For example, 10-20% of waste bags can be partly or wholly broken, in which case miscellaneous detached waste moves on the conveyor belt of a conveyor in the sorting of waste in addition to waste bags. In this case, when using handling devices that are of the type that push the waste allotment in question from the conveyor of the waste bags directly to the side, it causes other detached waste that is on the conveyor belt to also go along with the waste bags. This is undesirable for achieving satisfactory sorting.

The aim of the invention is to achieve a new type of solution in the sorting of wastes, by means of which the problems of prior art can be avoided.

### Brief description of the invention

The invention is based on a concept wherein wastes, more particularly waste bags, are provided with an RFID identifier and the wastes are taken to a sorting center or corresponding, in which a sorting apparatus is provided with a sensor that reads the information of the RFID identifier of the waste, more particularly of the waste bag. The information read by the sensor is transmitted to the sorting apparatus, which sorts the different waste allotments on the basis of the RFID identifier.

The method according to the invention is mainly characterized by what is disclosed in claim 1.

The method according to the invention is also characterized by what is disclosed in claims 2 - 12.

The solution according to the invention has a number of significant advantages. By using a closing means according to the invention, it is, on the other hand, ensured that waste bags, waste carrier bags, waste sacks or corresponding stay closed in transportation, and also the operation of the system, such as more effective sorting than earlier, can be controlled by means of an RFID identifier. Arranging an RFID identifier in a closing means enables the use of any bag, carrier bag, sack, or corresponding whatsoever in waste transport and does not require special separate transport containers intended for certain waste allotments. In this case only one disposal point can be conveniently used for different materials in connection with the waste transport system, in which case wastes are sorted in the system later, e.g. in a waste center, a sorting center or corresponding, into different allotments according to an RFID identifier. At the same time, feeding of waste material without an RFID identifier according to the invention, into a disposal point of the system can also, if necessary, be prevented, e.g. by arranging the door of the waste room to open only by means of an RFID identifier.

In the waste sorting center, to which the waste bags are transported conventionally with garbage trucks or in some other way, such as with a pneumatic waste transfer system, the waste bags are sorted into different waste allotments on the basis of the information given by the RFID identifiers. After this the waste bags are ripped open and the bags are removed from the rest of the waste. In this case it is possible to avoid bags ending up at a landfill site. The material of the bags can be recycled and reused. The RFID identifier of the closing means according to the invention can still be used to verify by the aid of a reader means that the waste bags have been removed from the sorted waste allotments.

A dedicated closing means comprising an RFID identifier is arranged for each waste allotment. Recyclable paper, for instance, is handled in a corresponding manner. In this case paper, such as newspapers, is placed in a bag and it is closed with a closing means according to the invention, which closing means comprises an RFID identifier.

An RFID identifier can be used to register the amount of waste produced by a certain user, in which case invoicing principles can be changed. On the other hand, a waste producer can be rewarded for sorting waste, e.g. by reducing the waste transport fees of waste that is fit for recycling.

According to a typical embodiment, the closing means is a sticker tape, which is an RFID sticker tape of the color of the waste allotment, which sticker tape comprises e.g. a text identifier according to the type of waste. In addition, an identification number or other identifier, which is separately specified according to each household, housing company, company or other waste producer that produces waste, can be formed for a closing means and/or RFID identifier. A closing means can also comprise a picture or drawing of the waste type in connection, with which the closing means in question is intended to be used.

The invention can thus be utilized by using the ordinary plastic carrier bags of a shop, which bags are closed with a closing means according to the invention. The carrier bag is filled with waste and closed by knotting its carrying loops. A typical way is to tie at first one knot, after which a closing means, preferably a sticker tape, is placed on top of the knot, and fixed over the knot of the carrier bag. After that a second knot is made with the carrying loops. The RFID identifier in this case remains at least partly protected and avoids transport damage. The closing means according to the invention also prevents the opening of the knots of the waste bag.

Using a closing means according to the invention in pneumatic pipe transport has the advantage that a dedicated disposal point for different allotments is not needed, but instead all waste goes to the same disposal point. In normal waste transport waste containers of only a single type are needed, and only one garbage truck collects them instead of 3-4 trucks. It is also advantageous if all wastes, such as mixed waste, biowaste, glass waste, metal waste and paper waste, are placed into a bag. In this case the allotments stay clean and their transportation is easier. The bag is automatically removed in a sorting center.

The invention can be applied according to one preferred embodiment so that dedicated closing means, which comprise RFID identifiers, are supplied to each household or other waste-producing community or corresponding. This assists sorting. In addition, by means of the combination of a closing means and RFID identifier according to the invention, it is easy to demonstrate where the costs of the waste handling system are generated. Fees can thus be allocated to waste producers more accurately than earlier.

According to one preferred embodiment, households have a fixed waste charge and receive a credit for each waste bag sorted in a sorting center. Based on the automatic reading of RFID identifiers, the system can allocate the sorted wastes by means of an information system so that the credit goes to the correct target.

Sorting in a sorting center on the basis of an RFID identifier is very easy, as also is identification of a household. Arranging an RFID identifier in a closing means thus gives numerous opportunities in waste sorting.

### Brief description of the figures

In the following, the invention will be described in detail by the aid of some embodiments with reference to the attached drawings, wherein:
Fig. 1 presents one embodiment of a closing means applicable in a system according to the invention, in connection with a waste bag,
Fig. 2 presents one system according to the invention as a simplified diagram,
Fig. 3 presents a detail of a system according to the invention,
Fig. 4 presents a detail of a system according to the invention.

### Detailed description of the invention

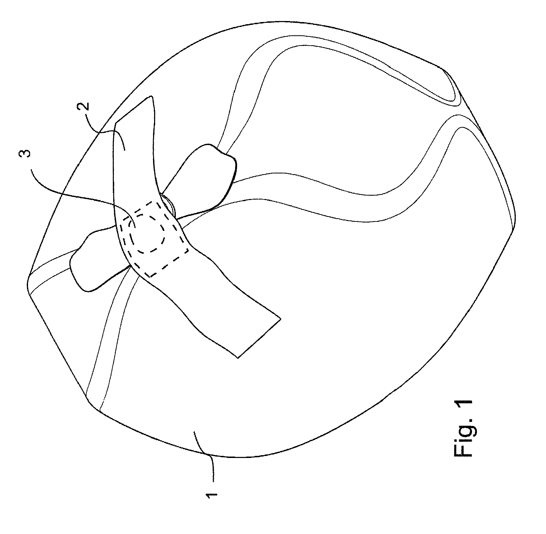

Fig. 1 presents one embodiment of a closing means 2 provided with an RFID identifier 3 applicable in a system according to the invention, in connection with a waste bag 1. A waste producer, such as a household, company or other community, pre-sorts the wastes that it produces into waste bags 1 and provides each bag 1 containing a sortable waste type with a closing means 2 comprising an RFID identifier 3 according to the type of waste. The waste types can be e.g. mixed waste, biowaste, paper, glass, metal, cardboard, hazardous waste, etc. There is typically a dedicated closing means for each type of sortable waste, i.e. waste allotment, in which closing means the type of waste the closing means in question is intended for, can be visually seen or otherwise sensed. In addition, the closing means comprises a customer code or corresponding, which is individual to each waste-producer community, such as to a household, company or other community. The corresponding information is coded into the memory of the RFID identifier.

Fig. 1 presents a waste bag 1, to which a closing means 2 is fixed, which closing means is provided with an RFID identifier 3. The closing means 2 is arranged in the embodiment of the figure over a knot formed in the waste bag 1, in which case it prevents opening of the knot during transportation. The knot is formed e.g. by knotting the carrying loops of the bag 1. The closing means 2 comprises an adhesive surface on the side against the outer surface of the bag 1, in which case it sticks to the outer surface of the bag.

The closing means in the case of Fig. 1 comprises a base part, onto which the RFID identifier 3 is arranged in a manner that is, in itself, known in the art. The base is preferably of sticker laminate or corresponding, which can be fixed to the waste bag easily owing to the adhesive surface. The RFID identifier 3 comprises a memory part (chip) and an antenna part. The RFID identifier is preferably a passive RFID identifier, in which case it does not need its own power source.

Alternatively, the closing means 2 can be used as a closer of the conventional mouth part of a waste sack, by winding it tightly around the mouth part. If so desired, the mouth part can still be knotted or provided with an additional closer.

A waste producer, such as a household, takes a waste bag 1 provided with a closing means according to the waste type to a disposal point of the system, such as to a waste bin situated in a waste room.

The combination of a closing means 2 of a waste bag and an RFID identifier 3 can be utilized in connection with a waste transport system e.g. as follows. Closing means according to the invention, i.e. combinations of a closing means and an RFID identifier, are distributed or otherwise delivered to households or other waste producers. The RFID identifier comprises the code or corresponding identifier of each waste producer, with which code the waste producer can, if necessary, be identified. According to one preferred embodiment, the closing means 2 comprises an identification code, such as a color code, according to which the closing means is used in the system in the manner agreed in connection with each sorted waste bag. The color code can be the size of the whole closing means or a pattern or text. It is conceivable that a color code of a certain color is defined for mixed waste, a second color code for biowaste, correspondingly own color codes for recyclable materials. In this case users equip a waste bag comprising a certain type of waste with a closing means that comprises a corresponding color code.

In this way the waste bag wanted by the user can be used in connection with any different waste allotment whatsoever, and a waste producer marks a waste bag 1 only with a color code of a closing means 2 and of an RFID identifier 3 according to one preferred embodiment of the invention. Typically also an RFID identifier also already contains the waste type, in connection with which it is used.

The waste bags 1 can be transported in the desired manner, e.g. on a waste transport vehicle or on a pneumatic conveying system, to the reception center for wastes, where the wastes are sorted into different waste allotments with the sorting apparatus according to the invention. In addition, the waste bags 1 used for transportation of wastes can be separated into their own waste allotment.

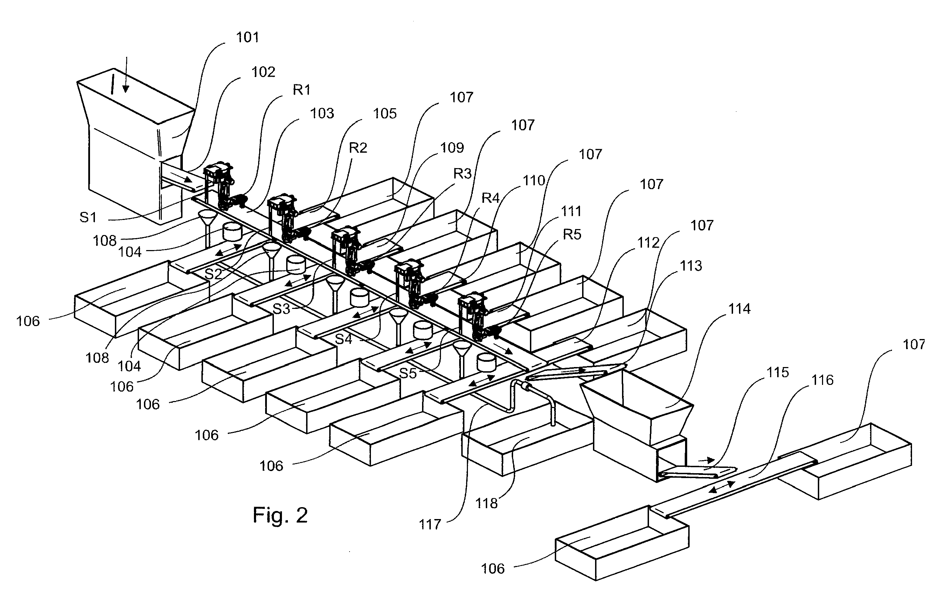

Fig. 2 presents a simplified and diagrammatic view of a sorting apparatus of wastes according to one embodiment of the invention. The waste bags 1 are fed into the sorting apparatus from the feed-in container 101 of the feeding apparatus onto the main conveyor 103 with the dispensing conveyor 102. Sorting conveyors 105, 109, 110, 111, 112 are arranged alongside and transversely to the main conveyor 103. Sensors S1, S2, S3, S4, S5, i.e. RFID identifier readers, which are able to read at least a part of an RFID identifier, are arranged alongside the route of the main conveyor. On the basis of the information read by the sensor S1, S2, S3, S4, S5, the handling devices R1, R2, R3, R4, R5 can be controlled. Handling devices R1, R2, R3, R4, R5 are thus arranged alongside the route of the main conveyor 103, which handling devices are able to grip a waste bag 1 and to lift the waste bag 1 from the conveyor 103 and to transfer the waste bag 1 that contains waste at first to a ripper 104, which comprises means for breaking the bag part of the waste bag such that the wastes inside the waste bag are able to move from the hole formed in the bag to the sorting conveyor 105, 109, 110, 111, 112 intended for the waste allotment in question. A sorting conveyor 105, 109, 110, 111, 112 transfers the wastes into the container 106, 107 intended for the waste allotment in question. The handling device R1...R5 transfers the empty waste bag 1 into the container intended for those empty waste bags or to e.g. a feeder hopper 108 of the pipe conveyor, in which case the empty bags are moved along the transfer pipe 117 into the container 118. The pipe conveyor can be e.g. a pneumatic pipe conveyor that is, in itself, prior art, in which conveyor material is moved by means of suction and/or a pressure difference.

The sorting conveyor 105, 109, 110, 111, 112 is of the type that can be used in both directions, in which case the opposite ends of the conveyor comprise a container 106, 107 for the sorted waste allotment. In this case when the first container 106 fills, the transfer direction of the conveyor can be changed, in which case the sorting conveyor transfers the material placed onto the conveyor into a second container 107 at the opposite end. The embodiment of Fig. 2 comprises corresponding containers 106, 107 arranged in connection with each sorting conveyor 105, 109, 110, 111, 112.

The conveyors and handling devices are presented without support structures in order to increase the clarity of the figures. The handling devices R1, R2, R3, R4, R5 in the embodiments of the figures are industrial robots. Gripping means 120 are arranged on the arm of the handling devices. In addition, the arm can comprise a detector apparatus, such as a camera, by means of which the position of a waste bag on the conveyor can be detected. After this the robot is able to turn the gripper such that the picking movement is performed according to the actual location of the waste bag.

In the figure each of the sensors S1, S2, S3, S4, S5 in the embodiments of the figures are arranged in step-like fashion, through the portal of which the waste bags 1 that travel on the main conveyor 103 and that are intended for sorting, pass.

Sorting occurs with the handling devices R1, R2, R3, R4, R5 arranged in connection with the main conveyor, which devices are controlled on the basis of the signals coming from the sensors. On the basis of the information of the RFID identifier read by the sensors, a command is transmitted for transferring the waste of the waste bags to the sorting conveyors 105, 109, 110, 111, 112 intended for the different waste allotments for transporting onwards into the containers intended for the different waste allotments.

Since it is assumed that e.g. 10 - 20% of the waste bags are partly or wholly broken, assorted detached waste therefore moves on the conveyor belt, in addition to the waste bags. In this case, when using handling devices that are of the type that only push the waste bag of the waste allotment in question to the side, it causes at the same time also other detached waste that is on the conveyor belt to go along. This is undesirable for achieving satisfactory sorting.

The solution according to an embodiment of the invention is that a handling device is used, e.g. a robot, which lifts the waste bag in the gripper of the handling device on the basis of a signal given to the control system by the sensor, i.e. by the RFID reader, first upwards and then the waste of the waste bag is transferred to the sorting conveyor.

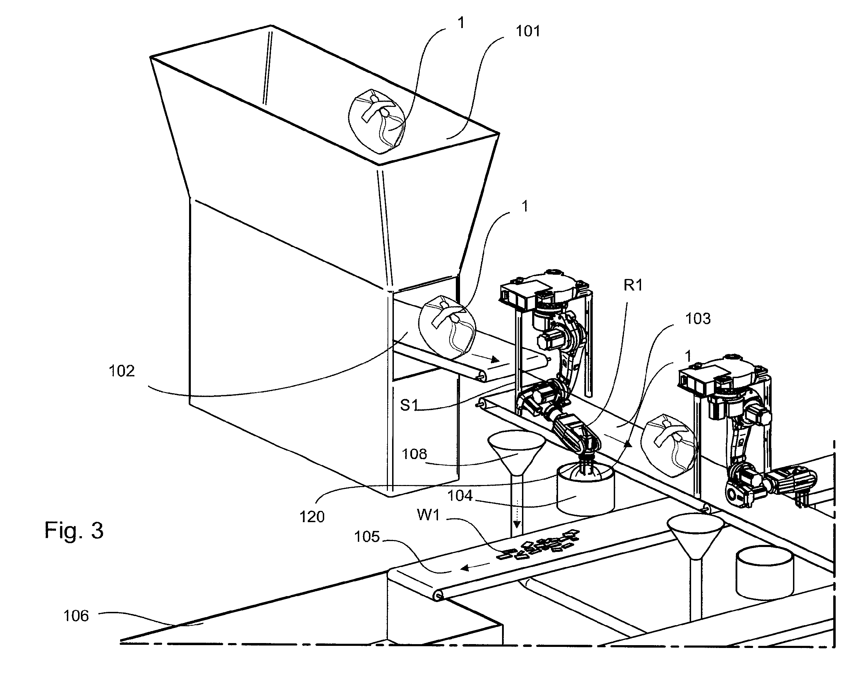

The grip of the gripper of the handling device, such as of a robot, can be adjusted such that the gripper grips the waste bag only at its top edge. When the waste bag is in the grip of the gripper of the robot, the bag can be moved by the robot easily in a manner that is, in itself, prior art. With the first handling means R1 the waste bag in the embodiment of Fig. 3 is transferred to the ripper 104, where a hole is formed in the bottom part of the bag, in which case the contents of the bag drop onto the sorting conveyor 105 in the embodiment of Fig. 3 The handling device R1 transfers an empty bag 1 into the container 118 intended for those e.g. to a feeder hopper 108 of the pipe conveyor 117. Alternatively the empty bag can be put back onto the conveyor belt of the main conveyor, in which case it travels into the container 114 of mixed waste arranged at the downstream end of the main conveyor. If necessary, intermediate conveyors 113 can be used. In the embodiment of Fig. 2, mixed waste can still be led from the container 114 into the transport containers 106, 107 with the conveyors 115, 116.

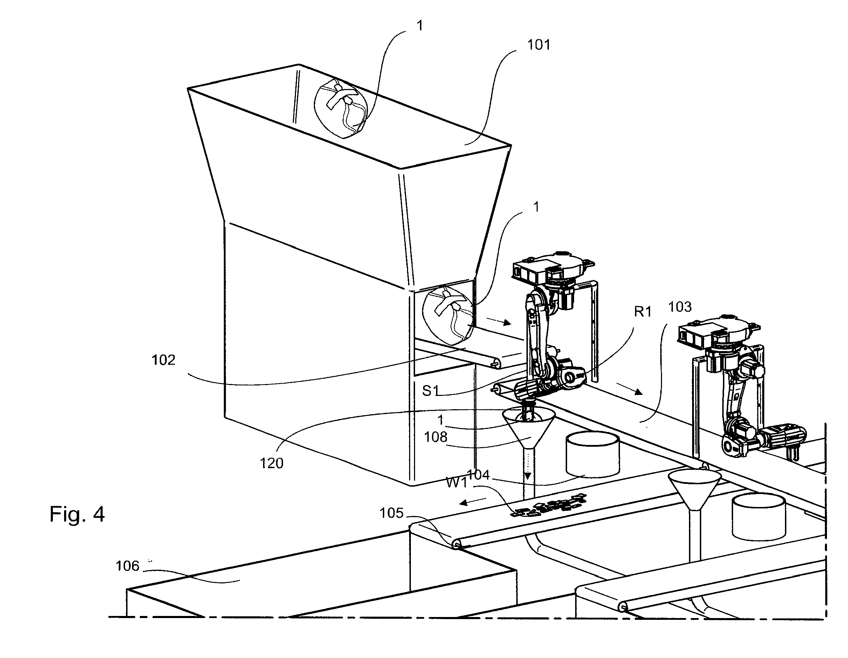

Figs. 3 and 4 present a detail of the apparatus of Fig. 2. In Fig. 3, the first handling device R1 has taken a waste bag 1 from the main conveyor 103 and lifted it at first upwards, in which case the material on the conveyor in the proximity of the bag remains on the conveyor 103 or drops back onto the conveyor 103. After this the handling device R1 has transferred the waste bag to the ripping apparatus 104, in which case at least one hole forms in the bag, typically in the bottom part of it, from where the contents of the bag are able to drop by gravity onto the first sorting conveyor 105. The sorting conveyor transfers the waste allotment W1, which has been transferred from a bag onto the conveyor, into a container 106 or 107 or to further processing. In the embodiment of Fig. 4, the handling device transfers the empty waste bag 1 into a feeder hopper 108, from where a pipe conveyor transfers the bag in a transfer pipe 117 into a container 118.

When the first sensor S1 detects the first waste allotment to be separated from the main conveyor on the basis of the RFID identifier 3 on the bag of the waste bag 1, the information is relayed from the sensor S1 to the control system of the handling device R1. In this case the first handling device R1, which in the embodiment of the figure is a robot, grips the selected waste bag 1 that is on the conveyor belt of the main conveyor 103, lifts the bag upwards and then transfers the selected bag to the side.

The quantity of handling devices R1...R5, robots in the embodiment of the figure, needed in sorting must be defined according to the waste quantities of the waste allotments to be sorted. In this case, e.g. paper and biowaste can be large waste allotments in terms of their waste quantity, and metal or glass correspondingly smaller waste allotments in terms of their waste quantity.

A number of handling means R1...R5 can be used in sorting waste allotments that are large in terms of their waste quantity. There can be more handling means, e.g. robots, than is presented in the figure, e.g. two on different sides of the main conveyor 103. These handling means can drop the waste of a waste bag onto the same sorting conveyor 105 from a hole cut into the bag with a ripper 104.

Depending on the number of waste allotments to be sorted and on the amount of waste of each waste allotment, waste bags provided with RFID identifiers can be flexibly sorted with the apparatus according to the invention.

In the sorting apparatus, or in the proximity of it, are sensors S1, S2, S3, S4, S5 that read the information, or at least a part of the information, of the RFID identifier 3 of the closing means 2 of each waste bag 1 brought on the conveyor 103. The sensor S1, S2, S3, S4, S5 is preferably of a type that is able to read the information in the memory of an RFID identifier 3 remotely from a sufficiently long distance. The information is transmitted from the sensors S1, S2, S3, S4, S5 of the sorting apparatus e.g. to the control system of the system, on the basis of which information the handling elements R1...R5 and/or the conveyors 102, 103, 105, 109, 110, 111, 112 are controlled.

Information from the sensors S1, S2, S3, S4, S5 can be transmitted to the control system wirelessly or by wireline, using data transfer methods and data transfer systems that are in themselves prior art.

The connection can also be bidirectional, in which case information coming from the sensors S1, S2, S3, S4, S5 can be saved in the memory of an RFID identifier 3. In this case the sensor S1, S2, S3, S4, S5 is not just a reading device but instead is a reading/transmission device of information.

An RFID identifier can be used to register the amount of waste produced by a certain user, in which case invoicing principles can be changed. On the other hand, a waste producer can be rewarded for sorting waste, e.g. by reducing the waste transport fees of waste that is fit for recycling.

According to a typical embodiment, the closing means is a closing sticker tape, which is an RFID sticker tape of the color of the waste allotment, which sticker tape comprises e.g. a text identifier according to the type of waste. In addition, an identification number or other identifier, which is separately specified according to each household, housing company, company or other waste producer that produces waste, can be formed for a closing means and/or RFID identifier.

The invention can thus be utilized by using the ordinary plastic carrier bags of a shop, which are closed with a closing means 2 according to the invention. The carrier bag is filled with waste and closed by knotting its carrying loops. A typical way is to tie at first one knot, after which a closing means, preferably a sticker tape, is placed on top of the knot, and fixed over the knot of the carrier bag. After that a second knot is made with the carrying loops. The RFID identifier in this case remains at least partly protected and avoids transport damage. The closing means according to the invention also prevents the opening of the knots of the waste bag.

In the waste sorting center to which the waste bags are transported with conventional garbage trucks or in some other way, the waste bags are sorted into different waste allotments on the basis of the information given by the RFID identifiers 3. After this the waste bags 1 are ripped open and the bags are removed from the rest of the waste. The RFID identifier of the closing means according to the invention can still be used to verify by the aid of a reader means that the waste bags have been removed from the sorted waste allotment.

The invention can be applied according to one preferred embodiment so that dedicated closing means, which comprise RFID identifiers, are supplied to each household. This assists sorting. In addition, by means of the combination of a closing means and RFID identifier according to the invention, it is easy to demonstrate where the costs of the waste handling system are generated. Fees can thus be allocated to waste producers more accurately than earlier.

According to one preferred embodiment, households have a fixed waste charge and receive a credit for each waste bag sorted in a sorting center. Based on the automatic reading of RFID identifiers, the system can allocate the sorted waste by means of an information system so that the credit goes to the correct target.

Although a combination of a closing means and an RFID identifier is the most preferred embodiment, the system does not exclude an alternative wherein waste bags comprising a ready RFID identifier are, if desired, used instead of a closing means. This, however, requires separate waste bags provided with an RFID identifier, for each waste allotment.

Sorting on the basis of an RFID identifier in a sorting center is very easy, as also is identification of a household. An RFID identifier gives numerous opportunities in waste sorting.

The invention thus relates to a method for sorting wastes, in which method the waste or recyclable material intended for sorting is brought in carrier bags, bags or sacks 1 to the sorting apparatus, which comprises a conveyor, from which the carrier bags, bags or sacks belonging to different waste allotments are separated from each other by guiding them into the containers according to the allotments or to further processing. An RFID identifier 3 is used in connection with the carrier bag, bag, sack 1 or corresponding used in waste transport, preferably a closing means 2 that is provided with an RFID identifier 3 is used in closing, or as verification of closing, the carrier bag, bag, sack 1 or corresponding, and in which method the carrier bags, bags, sacks 1, or corresponding, intended for sorting are moved on the conveyor, in connection with, or in the proximity of, at least one sensor S1, S2, S3, S4, S5 is arranged, on the basis of the information read from the RFID identifier 3 of which sensor at least one handling device R1, R2, R3, R4, R5, such as a robot, or a part of it, is controlled such that at least one handling device, or a part of it, transfers the carrier bags, bags, sacks 1, or corresponding, to be sorted from the conveyor into the different allotments on the basis of the information given by the RFID identifiers 3.

According to one preferred embodiment a carrier bag, bag, sack 1, or corresponding, is lifted from the conveyor at first upwards with at least one handling device R1...R5 and is then transferred to further processing.

According to one preferred embodiment, in the method a carrier bag, bag or sack 1, such as a plastic carrier bag, plastic sack or plastic bag, that is freely chosen by the user is used in waste transport.

According to one preferred embodiment a handling device R1...R5 transfers a carrier bag, bag, sack 1, or corresponding, from the conveyor into a means, such as a bag ripper 104, which brings about a hole in the carrier bag, bag, sack 1, or corresponding, from which hole the waste material or recyclable material inside is removed from the carrier bag, bag, sack 1, or corresponding.

According to one preferred embodiment, in the method a carrier bag, bag, sack 1, or corresponding, and the waste material or recyclable material are separated from each other.

According to one preferred embodiment in the method wastes are transferred from a hole formed in a bag, carrier bag, sack 1, or corresponding, onto a sorting conveyor, into a container or to further processing by means of gravity.

According to one preferred embodiment an emptied carrier bag, bag, sack 1, or corresponding, is transferred with a handling device into a container or into a feed-in container of the conveyor apparatus or to further processing.

According to one preferred embodiment in the method the carrier bags, bags, sacks 1, or corresponding, are transferred by a number of handling devices from the conveyor into different allotments in a sorted manner.

According to one preferred embodiment the carrier bags, bags, sacks 1, or corresponding, to be sorted are moved on the conveyor from the first end of the conveyor towards the second end, on the basis of the RFID identifiers 3 of the carrier bags, bags, sacks 1, or corresponding, to be transferred alongside the route of which conveyor the carrier bags, bags, sacks 1, or corresponding, are transferred with the handling devices into different allotments.

According to one preferred embodiment in the method a number of sensors S1, S2, S3, S4, S5 are arranged in connection with, or in the proximity of, the conveyor, on the basis of the information read from the RFID identifier 3 of which sensors a number of handling devices R1, R2, R3, R4, R5, such as robots, or a part of them, are controlled, such that the handling devices, or at least a part of them, transfer the carrier bags, bags sacks 1, or corresponding, to be sorted from the conveyor into the different allotments on the basis of the information given by the RFID identifiers 3.

According to one preferred embodiment at least a part of the wastes are led on the conveyor 103 directly to further processing or into a container.

According to one preferred embodiment, the carrier bags, bags and sacks 1, or corresponding, that have been separated from the wastes are transferred with a pneumatic pipe conveyor into a container or to further processing.

The use of an RFID identifier in connection with a pneumatic waste transport system is described in publication WO 2005/118435. The use of an RFID identifier in the sorting of waste is presented in publication WO 2006/096101.

It is obvious to the person skilled in the art that the invention is not limited to the embodiments presented above, but that it can be varied within the scope of the claims presented below.

## Claims

1. Method for sorting wastes, in which method the waste or recyclable material intended for sorting is brought in carrier bags, bags or sacks (1) to the sorting apparatus, which comprises a conveyor, from which the carrier bags, bags or sacks belonging to different waste allotments are separated from each other by guiding them into the containers according to the allotments or to further processing, in which method an RFID identifier (3) is used in connection with the carrier bag, bag, sack (1) or corresponding to be used in the waste transport, **cha racterized** in that a closing means (2), which is provided with an RFID identifier (3) is used in closing, or as verification of closing, the carrier bag, bag, sack (1) or corresponding, and in which method the carrier bags, bags, sacks (1) or corresponding intended for sorting are moved on a conveyor, in connection with which, or in the proximity of which, at least one sensor (S1, S2, S3, S4, S5) is arranged, on the basis of the information read from the RFID identifier (3) of the closing means (2) of which sensor at least one handling device (R1, R2, R3, R4, R5), such as a robot, or a part of it, is controlled such that at least one handling device, or a part of it, transfers the carrier bags, bags, sacks (1), or corresponding, to be sorted from the conveyor into the different allotments on the basis of the information given by the RFID identifiers (3).

2. Method according to claim 1, **characterized in that** a carrier bag, bag, sack (1) or corresponding is lifted from the conveyor at first upwards at least with one handling device (R1 ...R5) and is then transferred to further processing.

3. Method according to claim 1 or 2, **characterized in that** in the method a carrier bag, bag or sack (1), such as a plastic carrier bag, plastic sack or plastic bag, that is freely chosen by the user is used in waste transport.

4. Method according to any of claims 1 - 3, **characterized in that** the handling device (R1...R5) transfers a carrier bag, bag, sack (1), or corresponding, from the conveyor into a means, such as a bag ripper (104), which brings about a hole in the carrier bag, bag, sack (1), or corresponding, from which hole the waste material or recyclable material inside is removed from the carrier bag, bag, sack (1), or corresponding.

5. Method according to any of claims 1 - 4, **characterized in that** in the method a carrier bag, bag, sack (1), or corresponding, and the waste material or recyclable material are separated from each other.

6. Method according to any of claims 1 - 5, **characterized in that** in the method wastes are transferred from a hole formed in a bag, carrier bag, sack (1), or corresponding, onto a sorting conveyor, into a container or to further processing by means of gravity.

7. Method according to any of claims 1 - 6, **characterized in that** an emptied carrier bag, bag, sack (1), or corresponding, is transferred with the handling device into a container or into a feed-in container of the conveyor apparatus or to further processing.

8. Method according to any of claims 1 - 7, **characterized in that** in the method the carrier bags, bags, sacks (1), or corresponding, are transferred with a number of handling devices from the conveyor into different allotments in a sorted manner.

9. Method according to any of claims 1 - 8, **characterized in that** the carrier bags, bags, sacks (1), or corresponding, to be sorted are moved on the conveyor from the first end of the conveyor towards the second end, on the basis of the RFID identifiers (3) of the carrier bags, bags, sacks (1), or corresponding, to be transferred alongside the route of which conveyor the carrier bags, bags, sacks (1), or corresponding, are transferred with the handling devices into different allotments.

10. Method according to any of claims 1 - 9, **characterized in that** in the method a number of sensors (S1, S2, S3, S4, S5) are arranged in connection with, or in the proximity of, the conveyor, on the basis of the information read from the RFID identifier (3) of which sensors a number of handling devices (R1, R2, R3, R4, R5), such as robots, or a part of them, are controlled such that the handling devices, or at least a part of them, transfer the carrier bags, bags, sacks (1), or corresponding, to be sorted from the conveyor into the different allotments on the basis of the information given by the RFID identifiers (3).

11. Method according to any of claims 1 - 10, **characterized in that** at least a part of the wastes are led on the conveyor (103) directly to further processing or into a container.

12. Method according to any of claims 1-11, **characterized in that** the carrier bags, bags, sacks (1), or corresponding, that have been separated from the wastes are transferred with a pneumatic pipe conveyor into a container or to further processing.

## Patentansprüche

1. Verfahren zum Sortieren von Abfall, wobei in dem Verfahren der Abfall oder recyclingfähiges Material, das zum Sortieren vorgesehen ist, in Tragetaschen, Beuteln oder Säcken (1) zu der Sortiervorrichtung gebracht wird, die eine Fördereinrichtung aufweist, von der die Tragetaschen, Beutel oder Säcke, die zu unterschiedlichen Abfallzuteilungen gehören, voneinander getrennt werden, indem sie in die Behälter entsprechend den Zuteilungen oder der weiteren Verarbeitung geleitet werden, wobei in dem Verfahren eine RFID-Kennzeichnung (3) in Verbindung mit der Tragetasche, dem Beutel, dem Sack (1) oder dergleichen, die bzw. der bei dem Abfalltransport zum Einsatz kommt, verwendet wird, **dadurch gekennzeichnet, dass** eine Verschlusseinrichtung (2), die mit einer RFID-Kennzeichnung (3) versehen ist, zum Verschließen oder als Nachweis für einen Verschluss der Tragetasche, des Beutels, des Sacks (1) oder dergleichen verwendet wird, und wobei in dem Verfahren die Tragetaschen, Beutel, Säcke (1) oder dergleichen, die zum Sortieren vorgesehen sind, auf einer Fördereinrichtung bewegt werden, in Verbindung mit der oder in deren Nähe wenigstens ein Sensor (S1, S2, S3, S4, S5) angeordnet ist, wobei auf der Basis der Informationen, die aus der RFID-Kennzeichnung (3) der Verschlusseinrichtung (2) von dem Sensor gelesen werden, wenigstens eine Handhabungsvorrichtung (R1, R2, R3, R4, R5), wie beispielsweise ein Roboter oder ein Teil von diesem, derart gesteuert wird, dass wenigstens eine Handhabungsvorrichtung oder ein Teil von dieser die Tragetaschen, Beutel, Säcke (1) oder dergleichen, die sortiert werden sollen, auf der Basis der durch die RFID-Kennzeichnungen (3) gegebenen Informationen von der Fördereinrichtung in die verschiedenen Zuteilungen überführt.

2. Verfahren nach Anspruch 1, **dadurch gekennzeichnet, dass** eine Tragetasche, ein Beutel, ein Sack (1) oder dergleichen mit wenigstens einer Handhabungsvorrichtung (R1 ... R5) von der Fördereinrichtung zunächst nach oben gehoben wird und anschließend zur weiteren Verarbeitung übergeben wird.

3. Verfahren nach Anspruch 1 oder 2, **dadurch gekennzeichnet, dass** in dem Verfahren eine Tragetasche, ein Beutel oder ein Sack (1), wie beispielsweise eine Kunststofftragetasche, ein Kunststoffbeutel oder ein Kunststoffsack, die bzw. der von dem Benutzer frei gewählt wird, zum Abfalltransport verwendet wird.

4. Verfahren nach einem beliebigen der Ansprüche 1-3, **dadurch gekennzeichnet, dass** die Handhabungsvorrichtung (R1 ... R5) eine Tragetasche, einen Beutel, einen Sack (1) oder dergleichen von der Fördereinrichtung in eine Einrichtung, wie beispielsweise einen Beutelschlitzer (104), überführt, die ein Loch in der Tragetasche, dem Beutel, dem Sack (1) oder dergleichen herbeiführt, wobei von dem Loch aus das Abfallmaterial oder das recyclefähige Material im Innern aus der Tragetasche, dem Beutel, dem Sack (1) oder dergleichen abgeführt wird.

5. Verfahren nach einem beliebigen der Ansprüche 1-4, **dadurch gekennzeichnet, dass** in dem Verfahren eine Tragetasche, ein Beutel, ein Sack (1) oder dergleichen und das Abfallmaterial oder das recyclefähige Material voneinander getrennt werden.

6. Verfahren nach einem beliebigen der Ansprüche 1-5, **dadurch gekennzeichnet, dass** in dem Verfahren Abfälle von einem Loch aus, das in einem Beutel, einer Tragetasche, einem Sack (1) oder dergleichen gebildet wird, durch Schwerkraft auf einen Sortierförderer, in einen Behälter oder zur weiteren Verarbeitung überführt wird.

7. Verfahren nach einem beliebigen der Ansprüche 1-6, **dadurch gekennzeichnet, dass** eine geleerte Tragetasche, ein geleerter Beutel, ein geleerter Sack (1) oder dergleichen mit der Handhabungsvorrichtung in einen Behälter oder in einen Einspeisebehälter einer Beförderungsvorrichtung oder zur weiteren Verarbeitung überführt wird.

8. Verfahren nach einem beliebigen der Ansprüche 1-7, **dadurch gekennzeichnet, dass** in dem Verfahren die Tragetaschen, Beutel, Säcke (1) oder dergleichen mit einer Anzahl von Handhabungsvorrichtungen von der Fördereinrichtung in unterschiedliche Zuteilungen sortiert überführt werden.

9. Verfahren nach einem beliebigen der Ansprüche 1-8, **dadurch gekennzeichnet, dass** die Tragetaschen, Beutel, Säcke (1) oder dergleichen, die sortiert werden sollen, auf der Fördereinrichtung von dem ersten Ende der Fördereinrichtung zu dem zweiten Ende auf Basis der RFID-Kennzeichnungen (3) der Tragetaschen, Beutel, Säcke (1) oder dergleichen, die übertragen werden sollen, bewegt werden, wobei entlang der Strecke der Fördereinrichtung die Tragetaschen, Beutel, Säcke (1) oder dergleichen mit den Handhabungsvorrichtungen in unterschiedliche Zuteilungen überführt werden.

10. Verfahren nach einem beliebigen der Ansprüche 1-9, **dadurch gekennzeichnet, dass** in dem Verfahren eine Anzahl von Sensoren (S1, S2, S3, S4, S5) in Verbindung mit oder in der Nähe der Fördereinrichtung angeordnet werden, wobei auf der Basis der Informationen, die aus der RFID-Kennzeichnung (3) der Sensoren gelesen werden, eine Anzahl von Handhabungsvorrichtungen (R1, R2, R3, R4, R5), wie beispielsweise Roboter oder ein Teil von diesen, derart gesteuert werden, dass die Handhabungsvorrichtungen oder wenigstens ein Teil von diesen die Tragetaschen, Beutel, Säcke (1) oder dergleichen, die sortiert werden sollen, auf der Basis der durch die RFID-Kennzeichnungen (3) gegebenen Informationen von der Fördereinrichtung in die verschiedenen Zuteilungen überführen.

11. Verfahren nach einem beliebigen der Ansprüche 1-10, **dadurch gekennzeichnet, dass** wenigstens ein Teil der Abfälle unmittelbar auf die Fördereinrichtung (3) zur weiteren Verarbeitung oder in einen Behälter geleitet werden.

12. Verfahren nach einem beliebigen der Ansprüche 1-11, **dadurch gekennzeichnet, dass** die Tragetaschen, Beutel, Säcke (1) oder dergleichen, die von den Abfällen getrennt worden sind, mit einem pneumatischen Rohrförderer in einen Behälter oder zur weiteren Verarbeitung überführt werden.

## Revendications

1. Procédé pour le tri de déchets, dans lequel procédé les déchets ou matériaux recyclables destinés à être triés sont amenés dans des sacs de transport ou des sacs (1) au dispositif de tri, qui comprend un convoyeur, depuis lequel les sacs de transport ou sacs appartenant à différents lots de déchets sont séparés les uns des autres en les guidant dans les récipients selon les lots ou selon un traitement ultérieur, dans lequel procédé un identificateur RFID (3) est utilisé en liaison avec le sac de transport, sac (1) ou autre a utiliser dans le transport de déchets, **caractérisé en ce que** des moyens de fermeture (2) qui sont pourvus d'un identificateur RFID (3) sont utilisés pour fermer, ou vérifier la fermeture du sac de transport, sac (1) ou autre, et dans lequel procédé les sacs de transport, sacs (1) ou autres destinés à être triés sont déplacés sur un convoyeur, en liaison avec lequel, ou à la proximité duquel, au moins un capteur (S1, S2, S3, S4, S5) est agencé, en fonction de l'information lue depuis l'identificateur RFID (3) des moyens de fermeture (2) par ledit capteur, au moins un dispositif de manipulation (R1, R2, R3, R4, R5), comme un robot, ou une partie de celui-ci, étant commandé de telle manière qu'au moins un dispositif de manipulation, ou une partie de celui-ci, transfère les sacs de transport, sacs (1) ou autres pour être triés depuis le convoyeur dans les différents lots en fonction de l'information donnée par les identificateur RFID (3).

2. Procédé selon la revendication 1, **caractérisé en ce qu'**un sac de transport, sac (1) ou autre est soulevé du convoyeur d'abord vers le haut au moins avec un dispositif de manipulation (R1...R5) et est ensuite transféré pour un traitement ultérieur.

3. Procédé selon la revendication 1 ou 2, **caractérisé en ce que** dans le procédé un sac de transport, sac (1) ou autre, comme un sac de transport plastique ou un sac plastique, qui est librement choisi par l'utilisateur est utilisé pour le transport de déchet.

4. Procédé selon l'une quelconque des revendications 1-3, **caractérisé en ce que** le dispositif de manipulation (R1...R5) transfère un sac de transport, sac (1) ou autre, depuis le convoyeur dans des moyens, comme un déchire-sac (104), qui réalise un trou dans le sac de transport, sac (1) ou autre, depuis lequel trou le matériau de déchets ou matériau recyclable à l'intérieur est enlevé du sac de transport, sac (1) ou autre.

5. Procédé selon l'un e quelconque des revendications 1-4, **caractérisé en ce que** dans le procédé un sac de transport, sac (1) ou autre, et le matériau de déchets ou matériau recyclable sont séparés.

6. Procédé selon l'une quelconque des revendications 1-5, **caractérisé en ce que** dans le procédé des déchets sont transférés depuis un trou formé dans un sac de transport, sac (1) ou autre, sur un convoyeur de tri, dans un récipient ou vers un traitement ultérieur par gravité.

7. Procédé selon l'une quelconque des revendications 1-6, **caractérisé en ce qu'**un sac de transport, sac (1) ou autre vidé est transféré avec le dispositif de manipulation dans un récipient ou dans un récipient d'alimentation du dispositif de convoyeur ou vers un traitement ultérieur.

8. Procédé selon l'une quelconque des revendications 1-7, **caractérisé en ce que** dans le procédé les sacs de transport ou sacs (1) ou autres, sont transférés avec un certain nombre de dispositifs de manipulation depuis le convoyeur dans différents lots de façon à être triés.

9. Procédé selon l'une quelconque des revendications 1-8, **caractérisé en ce que** les sacs de transport ou sacs (1) ou autres, destinés à être triés sont déplacés sur le convoyeur de la première extrémité du convoyeur vers la seconde extrémité, en fonction des identificateurs RFID (3) des sacs de transport, sacs (1) ou autres pour être transférés le long de la route duquel convoyeur les sacs de transport, sacs (1) ou autres sont transférés avec les dispositifs de manipulation dans différents lots.

10. Procédé selon l'une quelconque des revendications 1-9, **caractérisé en ce que** dans le procédé un certain nombre de capteurs (S1, S2, S3, S4, S5) sont agencés en liaison avec le, ou à proximité du, convoyeur, en fonction de l'information lue depuis l'identificateur RFID (3) desquels capteurs, un certain nombre de dispositifs de manipulation (R1, R2, R3, R4, R5), comme des robots, ou une partie de ceux-ci, sont commandés de telle manière que les dispositifs de manipulation, ou au moins une partie de ceux-ci, transfèrent les sacs de transport ou sacs (1) ou autres, destinés à être triés depuis le convoyeur dans différents lots en fonction de l'information donnée par les identificateurs RFID (3).

11. Procédé selon l'une quelconque des revendications 1-10, **caractérisé en ce qu'**au moins une partie des déchets sont amenés sur le convoyeur (103) directement pour un traitement ultérieur ou dans un récipient.

12. Procédé selon l'une quelconque des revendications 1-11, **caractérisé en ce que** les sacs de transport ou sacs (1) ou autres, qui ont été séparés des déchets sont transférés avec un convoyeur à tuyauterie pneumatique dans un récipient ou vers un traitement ultérieur.
